# EUROPEAN PATENT SPECIFICATION

(11) **EP 3 507 534 B1**
(45) Date of publication and mention of the grant of the patent: **04.11.2026**
(21) Application number: 17847600.8
(22) Date of filing: 31.08.2017
(51) Int. Cl.: F16L 41/06, F16L 1/26, F16L 41/00, F16L 41/04, F16L 55/18, F16L 55/179

(54) **SYSTEM FOR AND METHOD OF SEALING A FLOWLINE WITH A METAL SEAL AFTER HOT TAPPING**
SYSTEM UND VERFAHREN ZUM METALLISCHEN ABDICHTEN EINER ROHRLEITUNG NACH DEM ANBOHREN IM LAUFENDEN BETRIEB
SYSTÈME ET PROCÉDÉ D'ÉTANCHÉIFICATION D'UNE CANALISATION PAR JOINT MÉTALLIQUE APRÈS PERÇAGE EN CHARGE

(30) Priority: 01.09.2016 US 201662382683 P
(43) Date of publication of application: 10.07.2019
(60) Divisional application: 23189062.5 / 4 279 790
(73) Proprietor: Oceaneering International, Inc., Houston, TX 77086 (US)
(72) Inventor: RESTIVO, Andrew Gregory, Cypress, Texas 77433 (US); SMITH, Norman, Houston, Texas 77041 (US)
(74) Representative: WP Thompson
(86) International application number: PCT/US2017/049784
(87) International publication number: WO 2018/045252

(56) References cited:
- US-A1- 2007 104 547
- US-A1- 2008 196 769
- US-A1- 2009 229 681
- US-A1- 2010 212 754
- US-A1- 2010 243 072
- US-B1- 6 290 431
- US-B1- 6 290 431
- US-B2- 8 534 306
- US-B2- 8 701 699

## Description

### RELATION TO PRIOR APPLCATIONS

This application claims priority from and through United States Application 62/374,281 titled "Modular Subsea Installation and Workover Control System" and filed on August 12, 2016.

### BACKGROUND OF THE INVENTION

Pipes and other flowlines, especially subsea, often require a hot tap. Hot tapping is a method of making a connection to a pipeline while the pipe remains pressurized in such a way as to prevent interruption to the normal flow or operation of the pipeline, and has been carried out extensively subsea for a long time.

Hot tapping has traditionally been carried out manually by divers, although some automatic systems have been used in the past. However, diver based systems are not possible at deeper water depths outside the range of divers. Further, current diver and land-based hot tap methods can contain metal sealing but this metal sealing is not at the tap, taking place instead at a flange of a clamp or at a tee. Moreover, most current hot tap seals are annular and operate as an annulus isolation seal whose compression is energized by a wellhead compression preload.

Reference is made to US 2010/243072 A1, which discloses a method and apparatus for tapping into a pressurized multiple strings of coaxially situated tubulars for wells and/or platforms which have overturned wherein the tapping occurs underwater via a diver or remotely operated vehicle. The assembly includes a tapping tool connectable to the tubular via a saddle connection and an adjustable tapping clamp with adjustable support/locking feet, compression plate with view ports, and angularly adjustable hot tapping system, along with a drill/saw system.

Reference is also made to US 6,290,431 B1, which discloses a diverless process of tapping a pressurized subsea pipeline without removing the pipeline from service. The process includes the steps of lowering and landing a measurement tool onto the pipeline in order to check ovality and straightness of the pipeline. Pipe lift frames are lowered and landed onto the pipeline spaced from a chosen location. The pipeline is lifted by hydraulic actuators or mechanical screws on the lift frames. A hot tap machine and accompanying orientation frame are lowered from the surface and landed on the pipeline between the pipe lift frames. A fitting clamp is secured to the pipeline. A hot tap machine is lowered onto the hot tap fitting and orientation frame. The pipeline is then tapped with the hot tap machine.

The present invention is defined by the claims.

### FIGURES

The figures supplied herein illustrate various embodiments of the invention.
**FIG. 1** is a view in partial perspective of an exemplary embodiment of a hot tap clamping system;
**FIG. 2** is a view in partial perspective of a clamp of the exemplary embodiment of a hot tap clamping system of **FIG. 1****;**
**Fig. 3** is a cutaway view in partial perspective of the exemplary embodiment of a hot tap clamping system of **Fig. 1****;**
**Fig. 4** is a view of a portion of a valve and a seal of the exemplary embodiment of a hot tap clamping system of **Fig. 1****;**
**Fig. 5** is a view in partial perspective of a hot tap interface of the exemplary embodiment of a hot tap clamping system of **Fig. 1****;**
**Fig. 6** is a view in partial perspective of a portion of the exemplary embodiment of a hot tap clamping system of **Fig. 1****;**
**Fig. 7** is a view in partial perspective of a common interface of the exemplary embodiment of a hot tap clamping system of **Fig. 1****;**
**Fig. 8** is top down cutaway view of a sealer of a further exemplary embodiment of a hot tap clamping system;
**Fig. 9** is top down cutaway view of a hot tap drill/plug running tool of the further exemplary embodiment of the hot tap clamping system of **Fig. 8****;**
**Fig. 10** is cutaway side view of a metal seal plug of the further exemplary embodiment of the hot tap clamping system of **Fig. 8****;** and
**Figs. 11-17** are cutaway, top down views of the further exemplary embodiment of a hot tap clamping system of **Fig. 8** in operation.

### DESCRIPTION OF EXEMPLARY EMBODIMENTS

Generally, all embodiments of the hot tap clamping systems described herein are operable by a remotely operated vehicle (ROV).

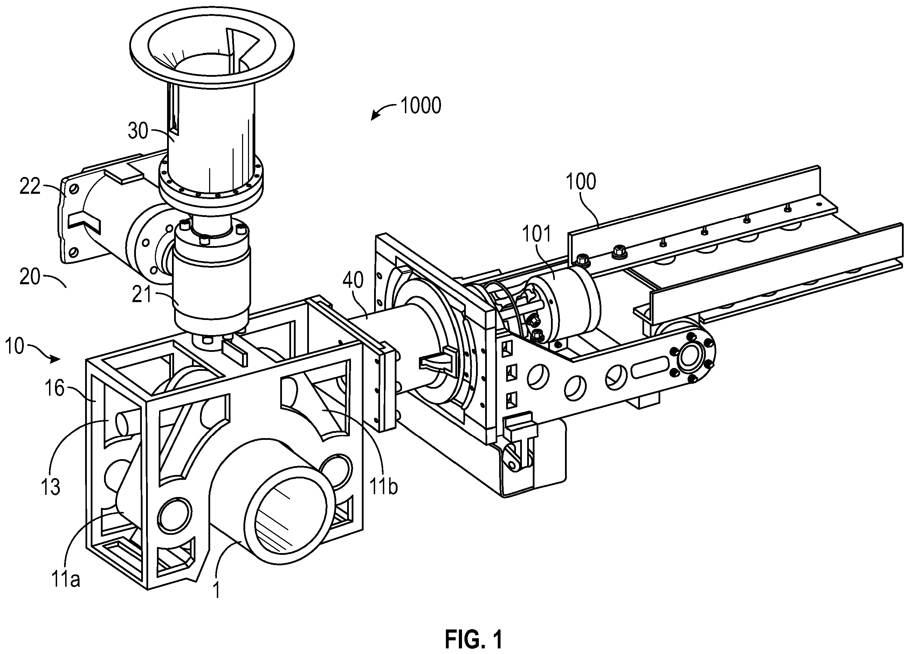

Referring now generally to **Fig. 1****,** in a first embodiment hot tap clamping system 1000 comprises clamp 10, hot tap assembly 20, hot tap interface 30 operatively connected to and in fluid communication with valve 21, and support 100 operatively connected to actuator interface 40. Support 100 is generally ROV compatible.

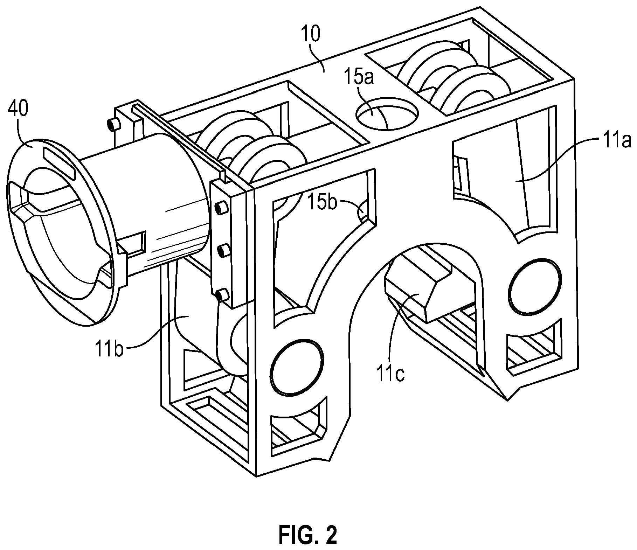

Referring additionally to **Fig. 2****,** in embodiments clamp 10 comprises housing 16 sized to fit over pipe 1, where housing 16 comprises one or more ports 15a,15b sized to allow insertion of a hot tap therethrough and movable gripper 11 displaced at least partially within housing 16. In certain embodiments, movable gripper 11 comprises movable gripper arms 11a,11b which are movable between a first position which allows positioning of housing 16 about a predetermined portion of pipe 1 and a second position which secures clamp 10 against pipe 1. Typically, at least one portion of movable gripper 11, e.g. an end portion one or both movable gripper arms 11a,11b, comprises gripper latch 11c.

Referring back to **Fig. 1****,** in certain embodiments one or more actuator interfaces 40 are typically present and operatively connected to movable gripper 11 such as via actuator 13 which is also operatively in communication with one or both movable gripper arms 11a,11b.

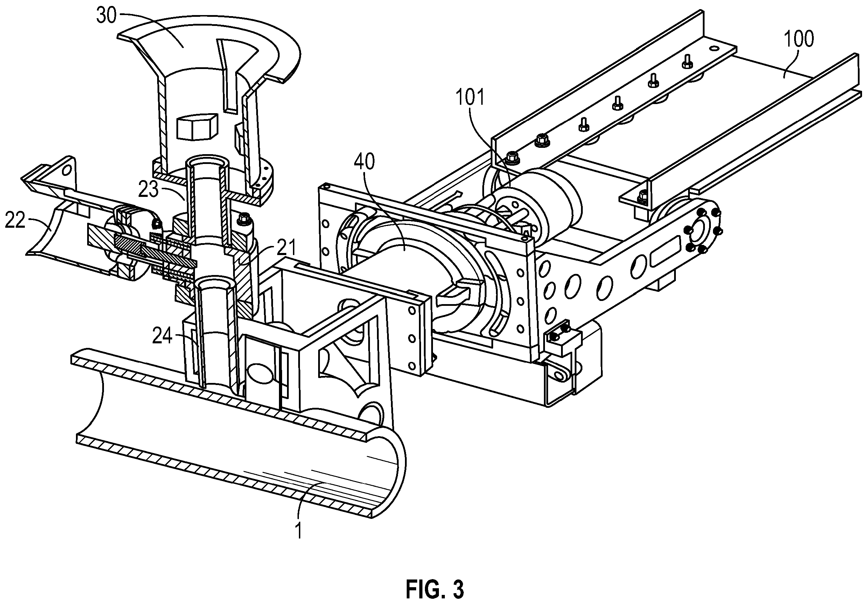

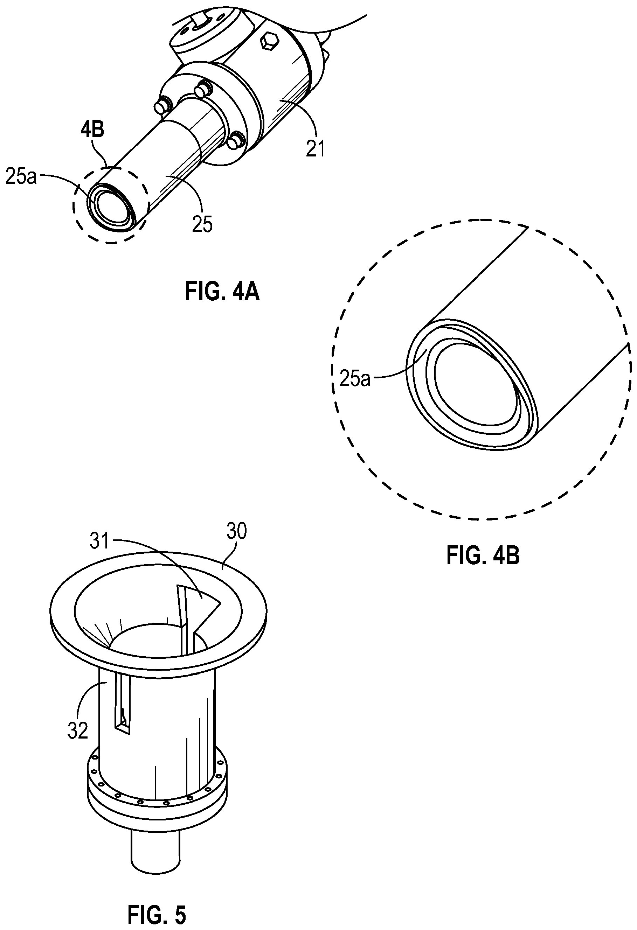

Referring additionally to **Fig. 3****,** in embodiments hot tap assembly 20 comprises valve 21 operatively connected to clamp 10 at or proximate ports 15a,15b **(****Fig. 2****);** upper portion 23 connected to a portion of valve 21 distally from clamp 10; lower portion 25 connected to a portion of valve 21 proximate clamp 10 and extendable or otherwise sized to engage pipe 1, where lower portion 25 comprises seal 25a **(****Fig. 4****);** and valve interface 22 operatively connected to valve 21. Seal 25a is typically a soft metal gasket which can seal to a machine metal seal.

Referring additionally to **Fig. 5****,** in embodiments hot tap interface 30 comprises one or more aligners 31 and one or more latch receivers 32. Aligners 31 may be configured such that they act as rough/fine aligners, e.g. having an initial opening which narrows as it progresses towards an opposite end of hot tap interface 30.

Referring back to **Fig. 1****,** support 100 typically comprises actuator 101 operatively in communication with actuator 13. As noted above, support 100 is typically ROV compatible.

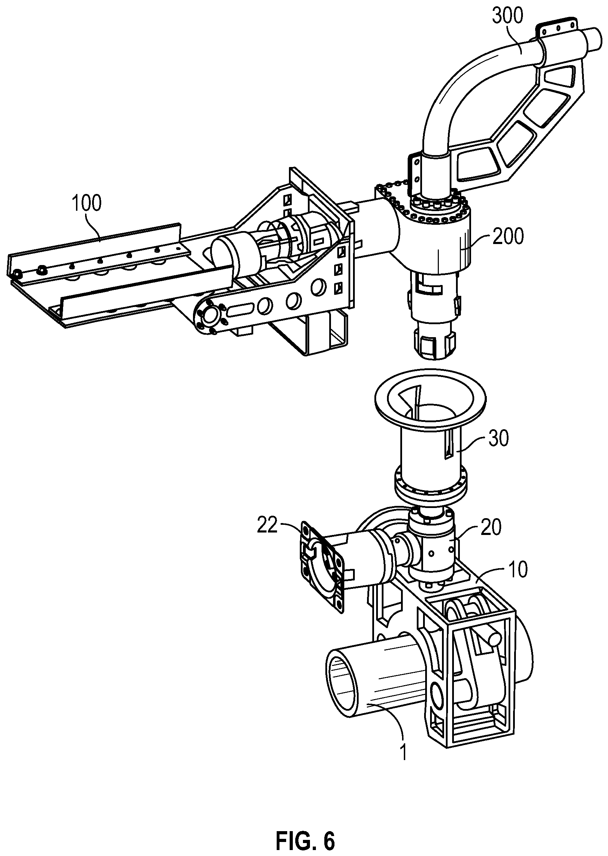

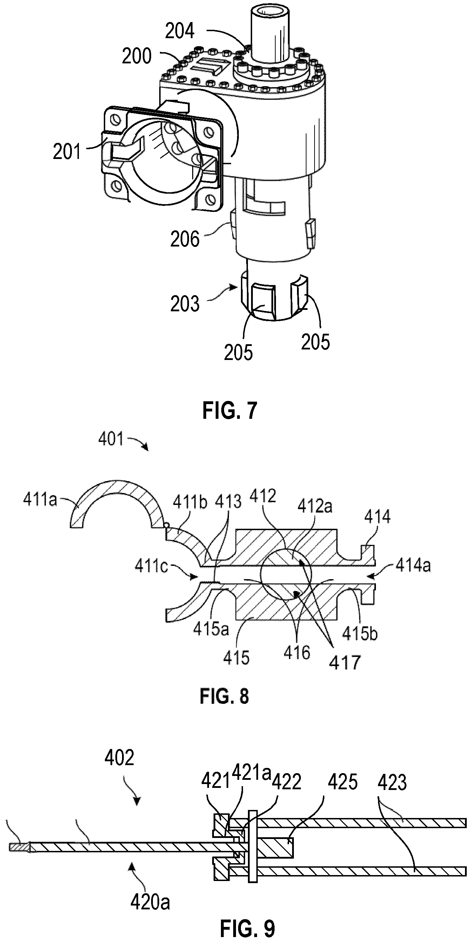

Referring now to **Fig. 6****,** in certain embodiments common interface 200 is present and adapted to interface with hot tap interface 30 and provide a connection for different operations such as to machining or coiled tubing 300. Referring additionally to **Fig. 7****,** common interface 200 typically comprises support interface 201 adapted to accept support 100; operations interface 204; and hot tap interface interconnect 203. Hot tap interface interconnect 203 comprises one or more latches 206 configured to be cooperatively received into a corresponding latch receiver 32 and one or more insertion guides 205 configured to be cooperatively received into a corresponding aligner 31.

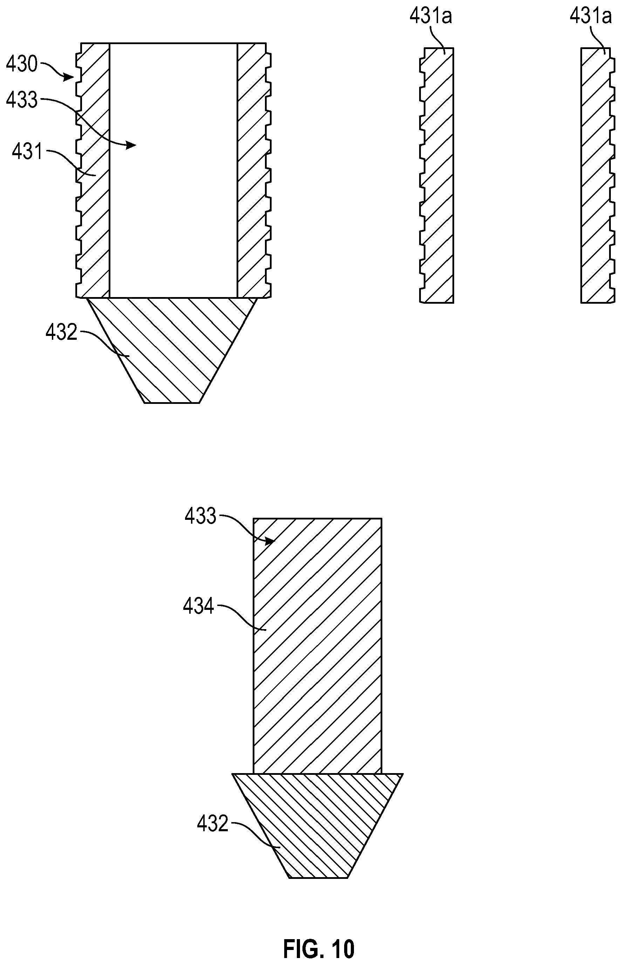

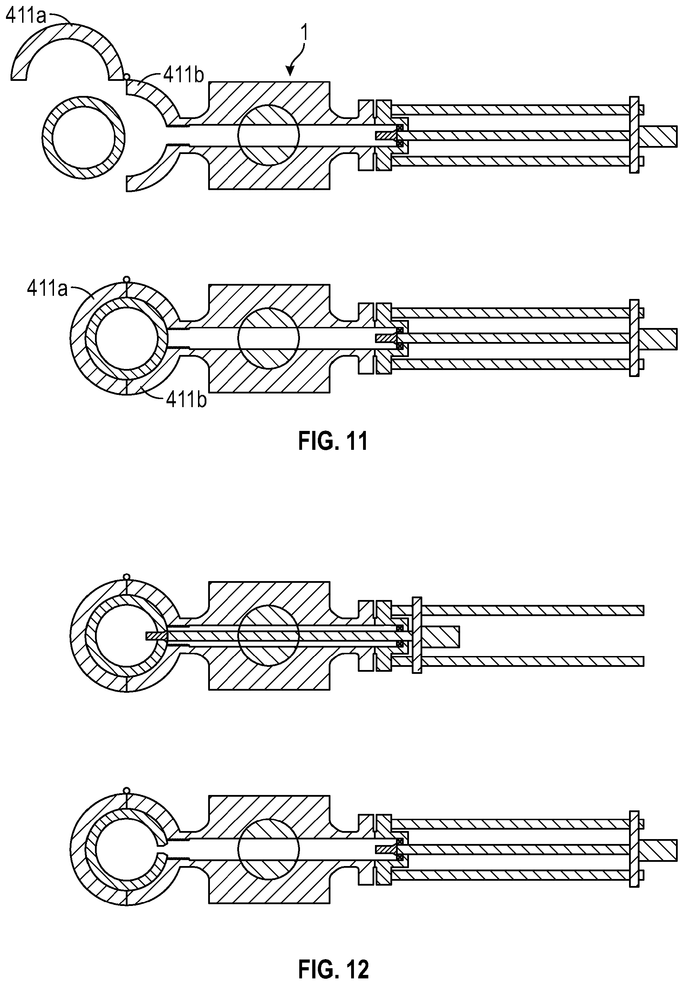

In a further embodiment, referring now to **Figs. 8** through **10****,** system for sealing a flowline with a metal seal after hot tapping 1 **(****Fig. 11****)** comprises sealer 401, hot tap drill/plug running tool 402 **(****Fig. 9****),** and metal seal plug 430 **(****Fig. 10****)** which is typically configured for use in sealing a flowline, e.g. pipe 1 **(****Fig. 1****),** with a metal seal after hot tapping.

Referring now to **Fig. 8****,** sealer 401 typically comprises sealer body 415, defining inner annulus 416; clamp 411 disposed about first end 415a of sealer body 415; and valve 412 at least partially disposed within inner bore 417 (not explicitly shown in the figures) where valve 412 comprises inner annulus 412a selectively alignable with inner annulus 416 of sealer body 415 and is adapted to selectively permit or deny fluid continuity between inner annulus 412a of valve 412 and inner annulus 416 of sealer body 415.

Clamp 411 is adapted to provide structural support for metal seal plug 430 **(****Fig. 10****)** and comprises first arcuate arm 411a and second arcuate arm 411b. Second arcuate arm 411b is connected to or otherwise part of sealer body 415 and hingedly or pivotally connected to first arcuate arm 411a. Second arcuate arm 411b comprises inner annulus 411c in fluid communication with inner annulus 416 of sealer body 415. Inner annulus 411c of second arcuate arm 411b typically comprises one or more internal threads 413 configured to cooperatively interface with threaded portion 431a **(****Fig. 10****)** of rotating collar 431 **(****Fig. 10****).**

In these embodiments, sealer connector interface 414 is disposed distally from clamp 411 at second end 415b of sealer body 415 and comprises inner annulus 414a in fluid communication with inner annulus 416 of sealer body 415.

Referring additionally to **Fig. 9****,** hot tap drill/plug running tool 402 comprises connector 421, which comprises inner annulus 421a. Connector 421 is adapted to cooperatively mate with sealer connector interface 414. Hot tap drill/plug running tool 402 further comprises retractable drill shaft 420, comprising first portion 420a extendable through inner annulus 421a of connector 421; feed mechanism 425 operatively connected to retractable drill shaft 420, where feed mechanism 425 may comprise a hydraulic or electric motor operatively connected to a lead screw; one or more seals 422 disposed within connector 421 about retractable drill shaft 420, e.g. proximate inner annulus 421a; and one or more guide rods 423 operatively connected to connector 421.

Referring to **Fig. 10****,** metal seal plug 430 typically comprises rotating collar 431 and substantially tubular portion 433, which is rotatingly disposed within rotating collar 431 and comprises substantially conical sealing surface 432 disposed at a first end portion of substantially tubular portion 433 of metal seal plug 430. Rotating collar 431 is adapted to preload metal seal 430 and comprises outer threaded portion 431a configured to transfer torque provided by a running tool into vertical force to preload metal seal 430. Substantially tubular portion 433 is typically a solid tapered completion plug comprising the same or similar material to that of pipe 1 or a corrosion resistant material, which is adapted to seal against a wall of pipe 1 as opposed to sealing on a neck of a tee in a hot tap fitting.

In the various embodiments, valve 21 **(****Fig. 1****)** and/or valve 412 **(****Fig. 8****)** typically comprise a ball valve but can comprise a gate valve, a flapper valve, or the like. Moreover, although two clamp arms are illustrated, other configurations may be equivalent, e.g. three clamp arms.

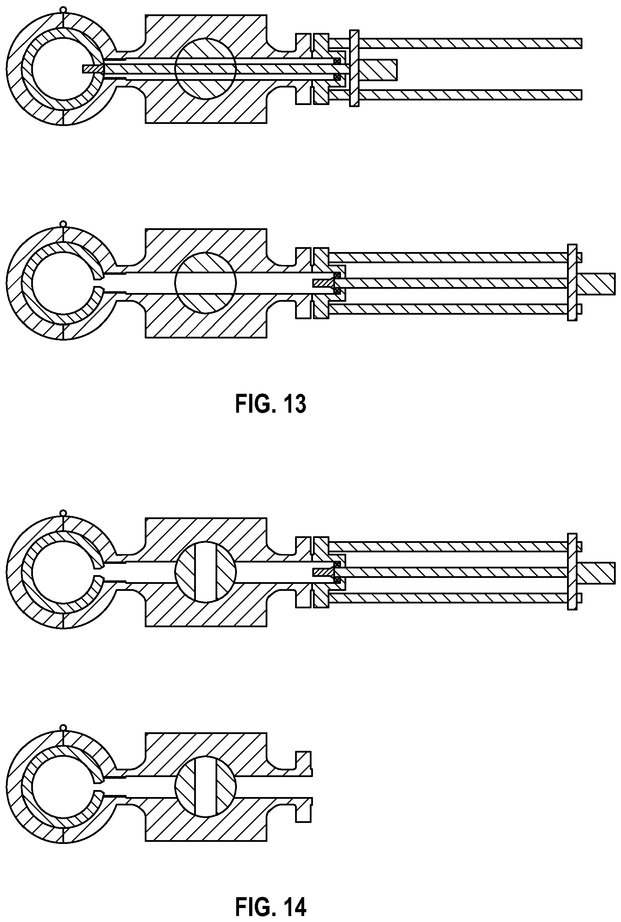

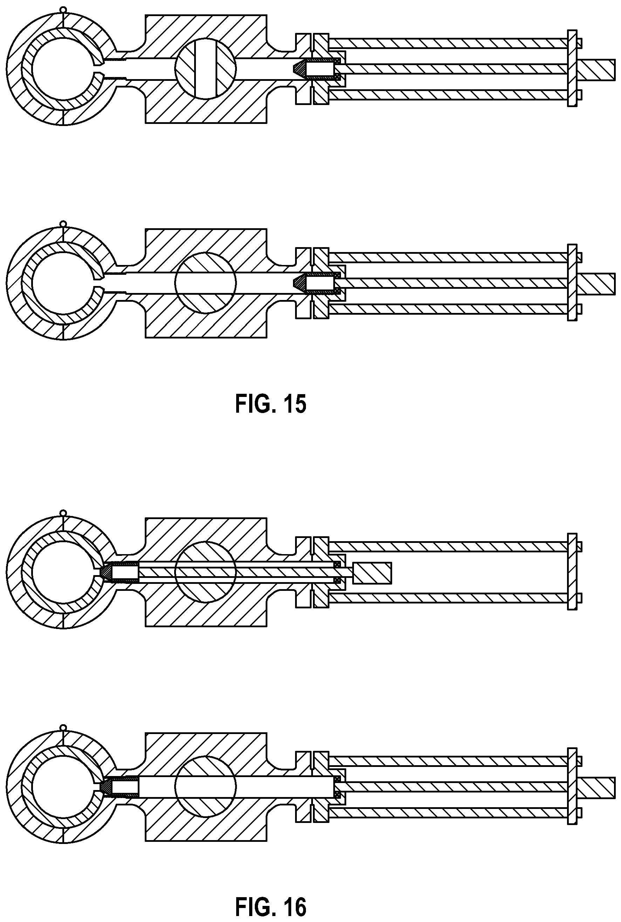

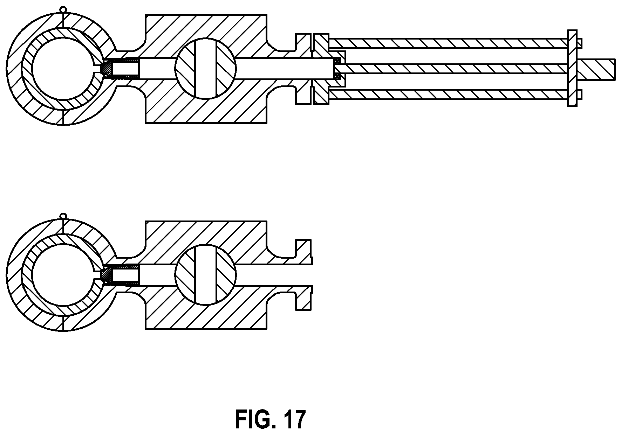

**In the operation of exemplary embodiments,** and referring generating to **Figs. 11-17****,** a flowline, e.g. pipe 1 **(****Fig. 1****)** may be sealed with a metal seal after hot tapping using the embodiments described above by landing system 1 to a flowline, e.g. pipe 1; disposing clamp 10 **(****Fig. 1****)** or clamp 411 **(****Fig. 8****)** about a portion of the flowline, e.g. pipe 1; and clamping the system to the flowline using clamp 10 **(****Fig. 1****)** or clamp 411 **(****Fig. 8****).** In embodiments, after clamping a first pressure test may be performed, typically by using a pressure test port on hot tap drill/plug running tool 402 where the pressure test port can be used by a remotely operated vehicle (ROV) to perform a pressure test and insure system integrity.

If the first pressure test is performed and successful, or if no first pressure test is performed, a drill bit such as drill bit 424 **(****Fig. 9****)** may be connected to retractable drill shaft 420 **(****Fig. 9****)** and hot tap drill/plug running tool connector 421 **(****Fig. 9****)** connected and mated to sealer body connector interface 414 **(****Fig. 8****)** such as by using remote operated connector, e.g. a Grayloc^{™} ROV clamp as manufactured by Oceaneering International, Inc. of Houston, Texas or other similar connector. If present, guide rods 423 are operatively connected to connector 421 and interface with a motor mounting plate to allow for axial motion. Guide rods 423 may also resist the torque from the motor, e.g. feed mechanism 425.

Valve inner annulus 412a **(****Fig. 8****)** is aligned with inner annulus 416 **(****Fig. 8****)** of sealer body 415 **(****Fig. 8****)** to allow retractable drill shaft 420 **(****Fig. 9****)** to advance through inner annulus 416 of sealer body 415 until drill bit 424 engages the flowline and a profile hole drilled. Advancing retractable drill shaft 420 into sealer body annulus 416 until drill bit 424 engages the flowline may comprise advancing drill bit 424 until it reaches a position proximate internal thread 413.

When the profile hole has been successfully drilled, retractable drill shaft 420 may be retracted into hot tap drill/plug running tool 402.

Inner annulus 412a **(****Fig. 8****)** of valve 412 **(****Fig. 8****)** is aligned with inner annulus 416 **(****Fig. 8****)** of sealer body 415 **(****Fig. 8****)** to remove fluid continuity between a portion of inner annulus 416 of sealer body 415 on one side of valve 412 and a second portion of inner annulus 416 of sealer body 415 on an opposite side of valve 415. Once aligned, hot tap drill/plug running tool 402 is disconnected from sealer body 415. Drill bit 424 **(****Fig. 9****)** may then be disconnected from retractable drill shaft 420 **(****Fig. 9****)** after which metal seal plug 430 **(****Fig. 10****)** may be connected to retractable drill shaft 420 at the end where drill bit 424 was attached. Typically, at this point a second pressure test is performed, by way of example by using the pressure test port on hot tap drill/plug running tool 402 where the pressure test port can be used by a remotely operated vehicle (ROV) to perform a pressure test and insure system integrity.

If the second pressure test is performed and is successful, or if no second pressure test is performed, hot tap drill/plug running tool 402 may be reconnected and mated to sealer body connector interface 414 **(****Fig. 8****)** and inner annulus 412a of valve 412 aligned with inner annulus 416 of sealer body 415 to allow retractable drill shaft 420 to advance through inner annulus 412a of valve 412. Once aligned, retractable drill shaft 420 is advanced into annulus 416 of sealer body 415 and through inner annulus 412a of valve 412 until rotating collar 431 **(****Fig. 10****)** engages inner annulus internal thread 413 **(****Fig. 8****)** of second arcuate arm 411b **(****Fig. 8****).** Threaded portion 431a of rotating collar 431 is then secured into internal thread 413 **(****Fig. 8****)** of second arcuate arm 411b after which metal seal plug 430 may be fixedly or removably secured into threaded portion 413. Typically, threaded portion 431a of rotating collar 431 transfers torque provided by hot tap drill/plug running tool 402 into vertical force to preload metal seal plug 430.

Once threaded portion 431a of rotating collar 431 is secured into internal thread 413 of second arcuate arm 411b, retractable drill shaft 410 is retracted into hot tap drill/plug running tool 402.

At this point, a third pressure test may be performed as described above for the first and second pressure tests and, if the third pressure test completes successfully, or if the third pressure test is not performed, valve 412 **(****Fig. 8****)** opened and hot tap drill/plug running tool 402 **(****Fig. 9****)** disengaged from sealer body 415 **(****Fig. 8****).**

As discussed above, each of the pressure tests, if performed, may be performed using a pressure test port on the drilling tool which may be accessed by an ROV's pumping and pressure test equipment.

In certain embodiments, clamp 10 **(****Fig. 1****)** or clamp 411 **(****Fig. 8****)** seals and valve 412 are only used for pressure containment during tapping operations. In certain embodiments as well, once metal seal plug 430 is set, valve 412 and seals only serve as backup to metal seal plug 430.

As can be understood by one of ordinary skill in these arts, the tapered metal seal plug 430 seals against a wall of pipe 1 rather sealing on a neck of a tee in a hot tap fitting as is taught by the prior art. In addition, one of ordinary skill in these arts will appreciate that clamp 10 or clamp 411, depending on the embodiment, serves as a structural support for metal seal plug 430. In most of the embodiments, the sealer body, e.g. sealer body 415, and the clamp, e.g. clamp 10 or clamp 411, remain attached to pipe 1 after the hot tap operation is completed.

The foregoing disclosure and description of the inventions are illustrative and explanatory. Various changes in the size, shape, and materials, as well as in the details of the illustrative construction and/or an illustrative method may be made without departing from the scope of the invention as defined by the claims.

## Claims

1. A hot tap clamping system operable by a remotely operated vehicle (ROV), comprising:
a. a clamp (10), the clamp comprising:
i. a housing (16) having a frame, the frame defining an inner void, the frame sized to land on and fit over a pipe, the housing further comprising a port (15a, 15b) sized to allow insertion of a hot tap therethrough to engage the pipe;
ii. a movable gripper (11) displaced at least partially within the housing, the movable gripper (11a, 11b) comprising a pair of gripper arms movable between a first position which allows insertion of the housing about a predetermined portion of the pipe (1) and a second position which secures the housing (10) against the pipe (1), one portion of the movable gripper comprising a gripper latch (11c);
iii. an actuator interface (40) connected substantially perpendicularly to a first edge side of the housing ; and
iv. a first actuator (13) disposed at least partially within the housing and operatively in communication with one of the plurality of gripper arms;
b. a hot tap assembly (20) connected substantially perpendicularly to an upper side of the housing, comprising:
i. a valve (21) operatively connected to the clamp (10) proximate the port (15a, 15b);
ii. an upper portion (23) connected to a portion of the valve distally from the clamp (10);
iii. a lower portion (25) connected to a portion of the valve proximally from the clamp (10) and extending throughout the port, the lower portion configured to engage the pipe (1), the lower portion comprising a seal (25); and
iv. a valve interface (22) operatively connected to the valve (21);
c. a hot tap interface (30) operatively connected to the upper portion of hot tap assembly and to the valve (21), the hot tap interface comprising:
i. an aligner (31); and
ii. a latch receiver (32); and
d. an ROV compatible support (100) operatively connected to the actuator interface (40) distally from the housing, the support comprising a second actuator (101) operatively in communication with the first actuator (13).

2. The hot tap clamping system of claim 1, further comprising a common interface (200) adapted to interface with the hot tap interface (30) and provide a standard connection, the common interface (200) comprising:
a. a support interface (201) adapted to accept the support (100);
b. an operations interface (204); and
c. a hot tap interface interconnect (203), comprising:
i. a latch (206) configured to be cooperatively received into the latch receiver (32); and
ii. an insertion guide (205) configured to be cooperatively received into the aligner (31) and to be secured into the hot tap interface using the latch receiver.

3. The hot tap clamping system of claim 1, wherein the lower portion is configured to engage the pipe by being extendable.

4. The hot tap clamping system of claim 1, wherein the lower portion is configured to engage the pipe by being sized to engage the pipe.

5. The hot tap clamping system of claim 1, wherein the seal comprises a soft metal gasket configured to seal to a machine metal seal.

6. The hot tap clamping system of claim 1, wherein the aligner comprises an initial opening which narrows from a larger end portion of the aligner as it progresses towards an opposite end of the hot tap interface (30).

7. The hot tap clamping system of claim 2, wherein the operations interface is configured to provide a machining operation.

8. The hot tap clamping system of claim 2, wherein the operations interface comprises a coiled tubing interface.

9. The hot tap clamping system of claim 2, wherein:
a. the common interface is substantially tubular; and
b. the hot tap interface is substantially complementarily tubular, comprising an inner diameter larger than an outer diameter of the common interface.

## Patentansprüche

1. Hot-Tap-Klemmsystem, durch ein ferngesteuertes Fahrzeug (ROV) bedienbar, umfassend:
a. eine Klemme (10), wobei die Klemme Folgendes umfasst:
i. ein Gehäuse (16) mit einem Rahmen, wobei der Rahmen einen inneren Hohlraum definiert, der Rahmen dafür bemessen ist, an einem Rohr zu landen und darüber zu passen, wobei das Gehäuse ferner einen Anschluss (15a, 15b) umfasst, der dafür bemessen ist, das Einfügen eines Hot-Tap durch ihn hindurch zu ermöglichen, um mit dem Rohr in Eingriff zu gelangen;
ii. einen beweglichen Greifer (11), der zumindest teilweise innerhalb des Gehäuses verschoben ist, wobei der bewegliche Greifer (11a, 11b) ein Paar von Greifarmen umfasst, die zwischen einer ersten Position, die das Einfügen des Gehäuses über einen festgelegten Abschnitt des Rohres (1) ermöglicht, und einer zweiten Position, die das Gehäuse (10) an dem Rohr (1) sichert, beweglich sind, wobei ein Abschnitt des beweglichen Greifers eine Greiferraste (11c) umfasst;
iii. ein Aktorzwischenstück (40), das im Wesentlichen senkrecht mit einer ersten Randseite des Gehäuses verbunden ist; und
iv. einen ersten Aktor (13), der zumindest teilweise innerhalb des Gehäuses angeordnet und funktionsfähig in Verbindung mit einem der mehreren Greiferarme steht;
b. eine Hot-Top-Anordnung (20), die im Wesentlichen senkrecht mit einer Oberseite des Gehäuses verbunden ist, umfassend:
i. ein Ventil (21), das nahe dem Anschluss (15a, 15b) funktionsfähig mit der Klemme (10) verbunden ist;
ii. einen oberen Abschnitt (23), der fern der Klemme (10) mit einem Abschnitt des Ventils verbunden ist;
iii. einen unteren Abschnitt (25), der nahe der Klemme (10) mit einem Abschnitt des Ventils verbunden ist und sich durch den Anschluss hindurch erstreckt, wobei der untere Abschnitt dafür gestaltet ist, mit dem Rohr (1) in Eingriff zu stehen, wobei der untere Abschnitt eine Dichtung (25) umfasst; und
iv. ein Ventilzwischenstück (22), das funktionsfähig mit dem Ventil (21) verbunden ist;
c. ein Hot-Tap-Zwischenstück (30), das funktionsfähig mit dem oberen Abschnitt der Hot-Tap-Anordnung und dem Ventil (21) verbunden ist, wobei das Hot-Tap-Zwischenstück Folgendes umfasst:
i. einen Ausrichter (31); und
ii. einen Rastenenaufnehmer (32); und
d. einen ROV-kompatiblen Träger (100), der fern des Gehäuses funktionsfähig mit dem Aktorzwischenstück (40) verbunden ist, wobei der Träger einen zweiten Aktor (101) umfasst, der funktionsfähig in Verbindung mit dem ersten Aktor (13) steht.

2. Hot-Tap-Klemmsystem nach Anspruch 1, ferner umfassend ein gemeinsames Zwischenstück (200), das dafür eingerichtet ist, mit dem Hot-Tap-Zwischenstück (30) gekoppelt zu sein und eine Standardverbindung bereitzustellen, wobei das gemeinsame Zwischenstück (200) Folgendes umfasst:
a. ein Trägerzwischenstück (201), das dafür eingerichtet ist, den Träger (100) aufzunehmen,
b. ein Betriebszwischenstück (204) und
c. eine Hot-Tap-Zwischenstückverbindung (203), umfassend:
i. eine Raste (206), die dafür gestaltet ist, zusammenwirkend in der Rastenaufnahme (32) aufgenommen zu sein, und
ii. eine Einfügeführung (205), die dafür gestaltet ist, zusammenwirkend in dem Ausrichter (31) aufgenommen und unter Verwendung der Rastenaufnahme in dem Hot-Tap-Zwischenstück gesichert zu sein.

3. Hot-Tap-Klemmsystem nach Anspruch 1, wobei der untere Abschnitt dafür gestaltet ist, mit dem Rohr in Eingriff zu gelangen, indem er erweiterungsfähig ist.

4. Hot-Tap-Klemmsystem nach Anspruch 1, wobei der untere Abschnitt dafür gestaltet ist, mit dem Rohr in Eingriff zu gelangen, indem er für den Eingriff mit dem Rohr bemessen ist.

5. Hot-Tap-Klemmsystem nach Anspruch 1, wobei die Dichtung einen Weichmetalldichtungsring umfasst, der dafür gestaltet ist, an einer Maschinenmetalldichtung abzudichten.

6. Hot-Tap-Klemmsystem nach Anspruch 1, wobei der Ausrichter eine Anfangsöffnung umfasst, die sich von einem größeren Endabschnitt des Ausrichters mit fortschreitender Annäherung an ein gegenüberliegendes Ende des Hot-Tap-Zwischenstücks (30) verengt.

7. Hot-Tap-Klemmsystem nach Anspruch 2, wobei das Betriebszwischenstück dafür gestaltet ist, einen Maschinenbearbeitungsbetrieb bereitzustellen.

8. Hot-Tap-Klemmsystem nach Anspruch 2, wobei das Betriebszwischenstück ein Coiled-Tubing-Zwischenstück umfasst.

9. Hot-Tap-Klemmsystem nach Anspruch 2, wobei:
a. das gemeinsame Zwischenstück im Wesentlichen röhrenförmig ist; und
b. das Hot-Tap-Zwischenstück im Wesentlichen komplementär röhrenförmig ist, umfassend einen Inndurchmesser, der größer als ein Außendurchmesser des gemeinsamen Zwischenstückes ist.

## Revendications

1. Système de serrage de dispositif de piquage à vif actionnable par un véhicule télécommandé (ROV), comportant :
a. un dispositif de serrage (10), le dispositif de serrage comportant :
i. un logement (16) ayant un cadre, le cadre définissant un vide intérieur, le cadre étant dimensionné pour venir en contact avec un tuyau et s'adapter sur celui-ci, le logement comportant par ailleurs un orifice (15a, 15b) dimensionné pour permettre l'insertion d'un dispositif de piquage à vif au travers de celui-ci à des fins de mise en prise du tuyau ;
ii. un organe de préhension mobile (11) déplacé au moins partiellement à l'intérieur du logement, l'organe de préhension mobile (11a, 11b) comportant une paire de bras de préhension en mesure de se déplacer entre une première position qui permet l'insertion du logement autour d'une partie prédéterminée du tuyau (1) et une deuxième position qui assujettie le logement (10) contre le tuyau (1), une partie de l'organe de préhension mobile comportant un verrou (11c) pour organe de préhension ;
iii. une interface d'actionneur (40) connectée de manière sensiblement perpendiculaire par rapport à un premier côté de bord du logement ; et
iv. un premier actionneur (13) disposé au moins partiellement à l'intérieur du logement et fonctionnellement en communication avec l'un de la pluralité de bras de préhension ;
b. un ensemble formant dispositif de piquage à vif (20) raccordé de manière sensiblement perpendiculaire à un côté supérieur du logement, comportant :
i. une vanne (21) raccordée fonctionnellement au dispositif de serrage (10) à proximité de l'orifice (15a, 15b) ;
ii. une partie supérieure (23) raccordée à une partie de la vanne de manière distale par rapport au dispositif de serrage (10) ;
iii. une partie inférieure (25) raccordée à une partie de la vanne de manière proximale par rapport au dispositif de serrage (10) et s'étendant au travers de l'orifice, la partie inférieure étant configurée à des fins de mise en prise du tuyau (1), la partie inférieure comportant un joint (25) ; et
iv. une interface de vanne (22) raccordée fonctionnellement à la vanne (21) ;
c. une interface de dispositif de piquage à vif (30) raccordée fonctionnellement à la partie supérieure de l'ensemble formant dispositif de piquage à vif et à la vanne (21), l'interface de dispositif de piquage à vif comportant :
i. un organe d'alignement (31) ; et
ii. un récepteur de verrou (32) ; et
d. un support compatible ROV (100) raccordé fonctionnellement à l'interface d'actionneur (40) de manière distale par rapport au logement, le support comportant un deuxième actionneur (101) fonctionnellement en communication avec le premier actionneur (13).

2. Système de serrage de dispositif de piquage à vif selon la revendication 1, comportant par ailleurs une interface commune (200) adaptée pour assurer une interface avec l'interface de dispositif de piquage à vif (30) et mettre en œuvre un raccord standard, l'interface commune (200) comportant :
a. une interface de support (201) adaptée pour accepter le support (100) ;
b. une interface fonctionnelle (204) ; et
c. une interconnexion d'interface de dispositif de piquage à vif (203), comportant :
i. un verrou (206) configuré pour être reçu de manière coopérative dans le récepteur de verrou (32) ; et
ii. un dispositif de guidage d'insertion (205) configuré pour être reçu de manière coopérative dans l'organe d'alignement (31) et pour être assujetti dans l'interface de dispositif de piquage à vif au moyen du récepteur de verrou.

3. Système de serrage de dispositif de piquage à vif selon la revendication 1, dans lequel la partie inférieure est configurée à des fins de mise en prise du tuyau en étant extensible.

4. Système de serrage de dispositif de piquage à vif selon la revendication 1, dans lequel la partie inférieure est configurée à des fins de mise en prise du tuyau en étant dimensionnée à des fins de mise en prise du tuyau.

5. Système de serrage de dispositif de piquage à vif selon la revendication 1, dans lequel le joint comporte un joint d'étanchéité en métal mou configuré à des fins de scellage à un joint métallique de machine.

6. Système de serrage de dispositif de piquage à vif selon la revendication 1, dans lequel l'organe d'alignement comporte une ouverture initiale qui va en se rétrécissant depuis une partie d'extrémité plus grande de l'organe d'alignement au fur et à mesure qu'il progresse vers une extrémité opposée de l'interface de dispositif de piquage à vif (30).

7. Système de serrage de dispositif de piquage à vif selon la revendication 2, dans lequel l'interface fonctionnelle est configurée pour fournir une opération d'usinage.

8. Système de serrage de dispositif de piquage à vif selon la revendication 2, dans lequel l'interface fonctionnelle comporte une interface de tube d'intervention enroulé.

9. Système de serrage de dispositif de piquage à vif selon la revendication 2, dans lequel :
a. l'interface commune est sensiblement tubulaire ; et
b. l'interface de dispositif de piquage à vif est tubulaire de manière sensiblement complémentaire, comportant un diamètre intérieur supérieur à un diamètre extérieur de l'interface commune.
